# EUROPEAN PATENT SPECIFICATION

(11) **EP 4 427 942 B1**
(45) Date of publication and mention of the grant of the patent: **07.10.2026**
(21) Application number: 24157697.4
(22) Date of filing: 14.02.2024
(51) Int. Cl.: B41J 3/50, G06K 17/00, B41J 3/407, H04N 1/00

(54) **IMAGE FORMING APPARATUS AND COMMUNICATION DEVICE**
BILDERZEUGUNGSVORRICHTUNG UND KOMMUNIKATIONSVORRICHTUNG
APPAREIL DE FORMATION D'IMAGES ET DISPOSITIF DE COMMUNICATION

(30) Priority: 02.03.2023 JP 2023032138
(43) Date of publication of application: 11.09.2024
(73) Proprietor: Toshiba TEC Kabushiki Kaisha, Tokyo 141-8562 (JP)
(72) Inventor: Tomiyama, Takashi, Tokyo 141-8562 (JP)
(74) Representative: Bandpay & Greuter

(56) References cited:
- JP-A- 2006 338 179
- US-A1- 2005 230 479
- US-A1- 2006 221 363
- US-A1- 2013 285 798

## Description

### FIELD

Embodiments described herein relate generally to an image forming apparatus and a communication device with radio tag reading and writing functions.

### BACKGROUND

An image forming apparatus is known that writes data to a radio tag provided on a medium and also prints an image on the medium. Such an image forming apparatus wirelessly stores data in the radio tag through a radio tag communication device.

In addition to the radio tag to which data is to be written, there may be a radio tag to which the image forming apparatus has failed to write data still within the communication range of the radio tag communication device. In such a case, the image forming apparatus may not be able to write data to the intended radio tag. US 2013/285798 A1 discloses a medium processing apparatus capable of writing information to an IC tag mounted on a medium.

### DISCLOSURE OF THE INVENTION

To this end, an image forming apparatus, a communication device, and a label printing system according to appended claims are provided. According to the invention, the image forming apparatus, the label printing system and the communication device can effectively write data to a radio tag are provided.

Furthermore, according to the present invention:
- the radio tag may be an RFID tag;
   the printer may be an electrographic printer;
- the communication device may include an antenna;
- the server in the label printing system may connected to the plurality of label printers via a network.

### BRIEF DESCRIPTION OF THE DRAWINGS

FIG. 1 depicts an image forming apparatus according to a first embodiment.
FIG. 2 is a block diagram of an image forming apparatus according to a first embodiment.
FIG. 3 is a diagram showing a configuration example of a memory of a radio tag.
FIGs. 4 and 5 are flowcharts showing an example of an operation of an image forming apparatus according to an embodiment.
FIG. 6 is a flowchart showing an example of an operation of a radio tag communication device.
FIG. 7 is a block diagram of an image forming system according to a second embodiment;
FIGs. 8 and 9 are flowcharts showing an example of an operation of an image forming apparatus in a second embodiment.
FIG. 10 is a flowchart showing an example of an operation of an image forming apparatus according to a third embodiment.
FIG. 11 is a flowchart showing an example of an operation of a radio tag communication device.

### DETAILED DESCRIPTION

In general, according to the invention, an image forming apparatus includes a communication device, a printer, and a processor. The printer prints images on a medium. The communication device transmits data to, and receives data from, a radio tag on the medium. The processor is configured to control the communication device to read tag identification information from the radio tag. If the tag identification information read from the radio tag is already included on a list, the communication device is controlled to attempt to read tag identification information from another radio tag. If the tag identification information read from the radio tag is not yet included on the list, the communication device is controlled to write data to the radio tag, and the printer is controlled to print an image on the medium.

Hereinafter, certain example embodiments will be described with reference to the drawings.

### (First embodiment)

An image forming apparatus (for example, a Multifunction printer (MFP)) according to an embodiment wirelessly writes data to a radio tag provided on a medium (for example, paper, or the like) through a radio tag communication device. After data is written to the radio tag, the image forming apparatus prints an image on the medium.

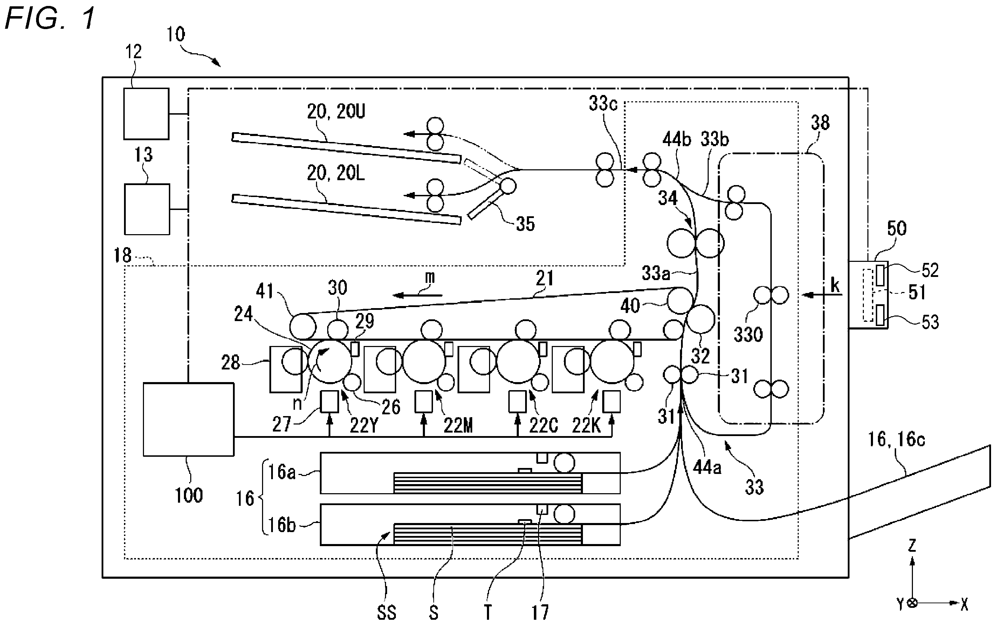

FIG. 1 is a diagram schematically showing a configuration example of an image forming apparatus 10. For example, the image forming apparatus 10 is placed in a workplace (e.g., an office).

In FIG. 1, the image forming apparatus 10 includes a network interface 12, a control panel 13, a radio tag communication device 50, a printer unit 18, and a controller 100. The printer unit 18 includes paper feed cassettes 16a and 16b. The controller 100 controls the control panel 13, the radio tag communication device 50, and the printer unit 18. The controller 100 controls sheet conveyance in the printer unit 18. Controlling sheet conveyance in this context means controlling sheet conveyance timing, sheet stop position, sheet conveyance speed, and the like.

The network interface 12 (communication interface) is for connecting to a network (for example, the Internet). The network interface 12 connects to other apparatuses through a network. For example, the network interface 12 supports Local Area Network (LAN) connections.

The control panel 13 includes an operation unit and a display unit. For example, the operation unit receives input from a user. For example, the operation unit is a touch panel. The display unit displays information to the user. For example, the display unit is configured integrally with a touch panel functioning as the operation unit. For example, the control panel 13 displays items related to the operation of the image forming apparatus 10 on the display unit in a configurable manner. The control panel 13 notifies the controller 100 of items selected by the user.

The paper feed cassettes 16a and 16b store sheets S (media) provided with radio tags T. In addition, the paper feed cassettes 16a and 16b can also store sheets S that are not provided with radio tags T. In the following description, unless otherwise specified, a sheet S is provided with a radio tag T embedded therein or otherwise mounted thereon. For the sheet S, a material such as paper or a plastic film can be used, for example.

The printer unit 18 performs an operation for forming an image on the sheet S. For example, the printer unit 18 forms an image indicated by image data on the sheet S. In the following description, forming an image on the sheet S is also referred to as "printing." Note that in the present embodiment, the printer unit 18 is a device that fixes a toner image, but is not limited thereto, and may be an inkjet type device.

The printer unit 18 includes an intermediate transfer belt 21. The printer unit 18 supports the intermediate transfer belt 21 with a driven roller 41, a backup roller 40, and the like. The printer unit 18 rotates the intermediate transfer belt 21 in a direction of arrow m. The printer unit 18 includes four sets of image forming stations 22Y, 22M, 22C, and 22K. The image forming stations 22Y, 22M, 22C, and 22K correspond to yellow (Y), magenta (M), cyan (C), and black (K), respectively. The image forming stations 22Y, 22M, 22C, and 22K are arranged below the intermediate transfer belt 21 along the rotation direction of the intermediate transfer belt 21.

Hereinafter, among the image forming stations 22Y, 22M, 22C, and 22K, the yellow (Y) image forming station 22Y will be described as a representative example. Note that the image forming stations 22M, 22C, and 22K have the same configuration as the image forming station 22Y, so that a detailed description will be omitted.

The image forming station 22Y includes a charger 26, an exposure scanning head 27, a developing device 28, and a photoconductor cleaner 29. The charger 26, the exposure scanning head 27, the developing device 28, and the photoconductor cleaner 29 are arranged around a photoconductive drum 24 which rotates in a direction of arrow n.

The image forming station 22Y includes a primary transfer roller 30. The primary transfer roller 30 is disposed to face the photoconductive drum 24 with the intermediate transfer belt 21 interposed therebetween.

The charger 26 uniformly charges the photoconductive drum 24. The exposure scanning head 27 selectively exposes the uniformly charged photoconductive drum 24 to form an electrostatic latent image on the photoconductive drum 24. The developing device 28 develops the electrostatic latent image on the photoconductive drum 24 using a two-component developer formed of toner and carrier.

The primary transfer roller 30 primarily transfers the toner image formed on the photoconductive drum 24 onto the intermediate transfer belt 21. A color toner image is formed on the intermediate transfer belt 21 by primary transfer of the toner image onto the intermediate transfer belt 21 by the primary transfer roller 30 of each of the image forming stations 22Y, 22M, 22C, and 22K. The color toner image is thus a toner image formed by sequentially overlapping Y (yellow), M (magenta), C (cyan), and K (black) toner images. The photoconductor cleaner 29 removes toner remaining on the photoconductive drum 24 after the primary transfer.

The printer unit 18 includes a secondary transfer roller 32. The secondary transfer roller 32 is disposed to face the backup roller 40 with the intermediate transfer belt 21 interposed therebetween. The secondary transfer roller 32 secondary-transfers the color toner images on the intermediate transfer belt 21 onto the sheet at the same time. The secondary transfer roller 32 functions as a component of an image forming unit that forms an image on a sheet. Note that in the following description, when "toner image" is used, it may refer to either a color toner image or a toner image of only one color. Further, in some examples, the toner image may be a toner image using a decolorable toner.

The conveyance path 33 is a path along which the sheet S is conveyed by a plurality of conveyance rollers (for example, conveyance rollers 330 (conveyance device) that conveys the sheet S, or the like). The conveyance path 33 includes a first conveyance path 33a, a second conveyance path 33b, and a third conveyance path 33c. The first conveyance path 33a is a conveyance path from a merging portion 44a to a branching portion 44b. The second conveyance path 33b is a conveyance path that passes through the inside of the double-sided printing device 38, and is a conveyance path from the branching portion 44b to the merging portion 44a, which is different from the first conveyance path 33a. The third conveyance path 33c is a conveyance path from the branching portion 44b to a paper discharge tray 20.

The sheet S is taken out from the sheet placement unit 16 (any one of the paper feed cassette 16a, the paper feed cassette 16b, and a manual feed tray 16c). A sheet set SS including a plurality of sheets S is disposed in the sheet placement unit 16. Registration rollers 31 are provided upstream of the secondary transfer roller 32 along the conveyance direction of the sheet S in the first conveyance path 33a. The sheet S from the sheet placement unit 16 is temporarily stopped at a position where two stopped registration rollers 31 are in contact with each other. At this time, the tip end of the sheet S abuts against the registration rollers 31, and the inclination (skew) of the sheet S is corrected. The controller 100 starts rotating the registration rollers 31 in accordance with the position of the toner image formed on the rotating intermediate transfer belt 21, and moves the sheet S to the position of the secondary transfer roller 32.

The toner image formed on the intermediate transfer belt 21 is secondarily transferred onto the sheet S by the secondary transfer roller 32. The secondarily transferred toner image is then fixed on the sheet S by the fixing device 34. **In** this way, an image is formed on the sheet S under the control of the controller 100.

The controller 100 conveys the sheet S on which the toner image has been fixed by the fixing device 34 to the third conveyance path 33c, and discharges the sheet to the paper discharge tray 20.

The paper discharge tray 20 includes an upper tray 20U (first tray) and a lower tray 20L (second tray). A distribution mechanism 35 is provided upstream of the paper discharge tray 20 along the conveyance direction of the sheets S. The distribution mechanism 35 switches the discharge destination of the sheet S between the upper tray 20U and the lower tray 20L.

The radio tag communication device 50 (as an example of a communication device) wirelessly transmits and receives data to and from a radio tag T under control from the controller 100.

The radio tag communication device 50 includes a processor 52, a memory 53, and an antenna 51.

The processor 52 has a function of controlling the overall operation of the radio tag communication device 50. The processor 52 may also include or be combined with an internal memory and various interfaces. The processor 52 implements various processes by executing programs stored in the internal memory, the memory 53, or the like.

The memory 53 stores various types of data. For example, the memory 53 functions as a ROM, a RAM, and an NVM (non-volatile memory).

For example, the memory 53 stores control programs, control data, and the like. The control program and control data are installed in advance according to the specifications of the radio tag communication device 50. For example, the control program is a program that supports functions implemented by the radio tag communication device 50.

Further, the memory 53 also temporarily stores data being processed by the processor 52. Further, the memory 53 may store data necessary for executing the application program, results of executing the application program, and the like.

The antenna 51 is for wireless communication with the radio tag T. The antenna 51 transmits radio waves under the control of the processor 52. Furthermore, the antenna 51 converts received radio waves into electrical signals and supplies the electrical signals to the processor 52.

The radio tag T in the present embodiment is, for example, a Radio Frequency Identification (RFID) tag. The radio tag communication device 50 transmits radio waves primarily in a direction of arrow k, for example. The processor 52 of the radio tag communication device 50 communicates with the radio tag T provided on a sheet S via the antenna 51. For example, the radio tag communication device 50 can wirelessly communicate with the radio tag T of a sheet S that has been temporarily stopped by the registration rollers 31 on the first conveyance path 33a. The radio tag communication device 50 reads information from the radio tag T and writes information to the radio tag T.

The information written in the radio tag T can be the identification number of the sheet S to which the radio tag T is attached, or the like. For example, if the sheet S is used for product or package distribution, or the like, information indicating package contents, information indicating the destination, content to be printed on the sheet S, or the like may be written in the radio tag. In the present embodiment, the radio tag communication device 50 uses, for example, a 900 MHz-band radio wave system (UHF). However, the RFID method and frequency band are not limited to this, and other methods and frequency bands can also be adopted.

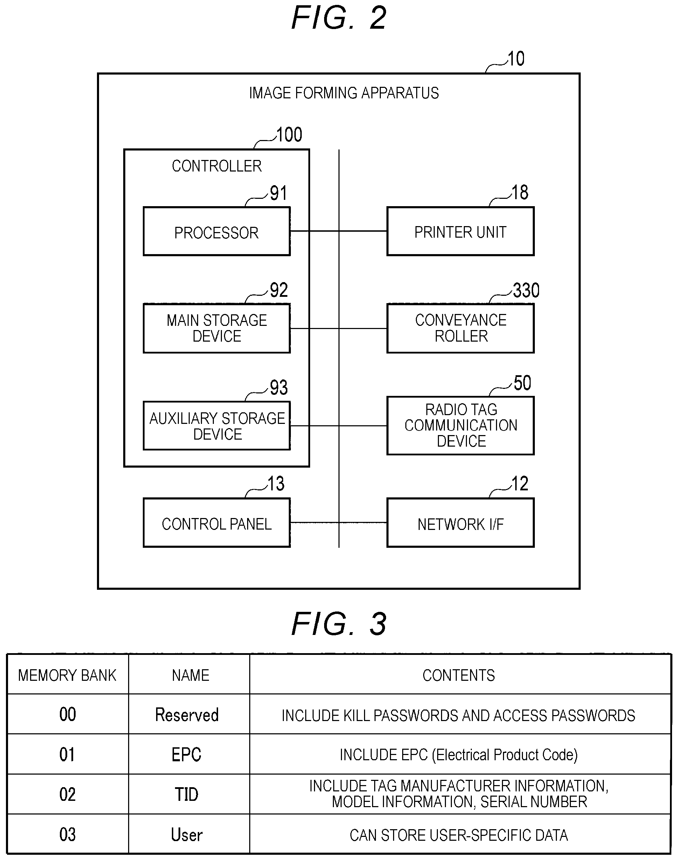

Next, the control system of the image forming apparatus 10 will be described. FIG. 2 is a block diagram showing a control system of the image forming apparatus 10. As shown in FIG. 2, the image forming apparatus 10 includes a controller 100, a control panel 13, a printer unit 18, conveyance rollers 330, a radio tag communication device 50, network interface 12, and the like.

The controller 100 includes a processor 91, a main storage device 92, an auxiliary storage device 93, and the like.

The processor 91, the main storage device 92, the auxiliary storage device 93, the control panel 13, the printer unit 18, the conveyance rollers 330, the radio tag communication device 50, and the network interface 12 are connected to each other via a data bus or the like.

The control panel 13, the printer unit 18, the conveyance rollers 330, the radio tag communication device 50, and the network interface 12 are as described above.

The processor 91 has a function of controlling the overall operation of the controller 100. The processor 91 may include or be integrated with an internal memory, various interfaces, and the like. The processor 11 implements various processes by executing programs stored in the internal memory, the memory 53, or the like.

The main storage device 92 is a volatile memory. The main storage device 92 is a working memory or a buffer memory. The main storage device 92 stores various application programs based on instructions from the processor 11. Further, the main storage device 92 may store data necessary for executing the application program, results of executing the application program, and the like.

The auxiliary storage device 93 is a nonvolatile memory to which data can be written and rewritten. Examples of the auxiliary storage device 93 include a hard disk drive (HDD), a solid-state drive (SSD), a flash memory, or the like. The auxiliary storage device 93 stores control programs, applications, various types of data, or the like depending on the operational purpose of the image forming apparatus 10.

Furthermore, the auxiliary storage device 93 stores a TID (tag ID) list indicating the tag IDs (TIDs) of the radio tags T to which data is written. The TID list shows the TIDs of the radio tags T for which data writing was successful and the TIDs of radio tags T for which data writing failed.

Next, a configuration example of the memory included in the radio tag T will be described.

FIG. 3 shows a configuration example of the memory included in the radio tag T.

As shown in FIG. 3, the memory includes four memory banks. Here, the memory includes memory banks labeled as "00", "01 ", "02", and "03".

Memory bank "00" (Reserved) stores kill passwords, access passwords, and the like.

Memory bank "01" (EPC) stores an Electrical Product Code (EPC) or the like.

Memory bank "02" (TID) stores radio tag identification information (TID) that identifies the radio tag T. Here, the memory bank "02" stores tag manufacturer information, model information, serial number, and/or the like as TID information. For example, data is stored in the memory bank "02" when the radio tag T is initially manufactured.

Memory bank "03" (User) stores user-specific data and the like.

Note that the configuration of the memory included in the radio tag T is not limited to a specific configuration.

Next, the functions implemented by the radio tag communication device 50 will be described. The functions implemented by the radio tag communication device 50 are implemented by the processor 52 executing programs stored in the internal memory, the memory 53, or the like.

First, the processor 52 has a function of reading data from the radio tag T under the control of the controller 100.

Here, the processor 52 reads the TID from the radio tag T.

The processor 52 acquires a command to read the TID from the controller 100. Upon acquiring the command, the processor 52 starts transmitting radio waves from the antenna 51. After the transmission of radio waves is started, the processor 52 waits until there is a response from the radio tag T.

In the present case, the radio tag T receives the radio waves from the antenna 51 (an interrogation wave) and makes a response (a response wave).

The processor 52 receives a response from the radio tag T through the antenna 51. Upon receiving the response, the processor 52 transmits a command to read the TID to the radio tag T through the antenna 51.

Here, it is assumed that the radio tag T receives the command and transmits a response including the TID.

The processor 52 receives a response including the TID from the radio tag T through the antenna 51. Upon receiving the response, the processor 52 transmits a response indicating the TID to the controller 100.

Note that if the processor 52 has failed to read the TID, the processor 52 transmits a response to the controller 100 indicating that the TID reading has failed.

Next, the processor 52 has a function of writing data (for example, EPC, or the like) into the radio tag T under the control of the controller 100.

The processor 52 acquires a command to write data from the controller 100. The command includes the data and the TID of the radio tag T to which the data is to be written.

Upon acquiring the command, the processor 52 starts transmitting radio waves from the antenna 51. After the transmission of radio waves is started, the processor 52 transmits a selection command to select the radio tag T having the TID indicated by the command. After the selection command is transmitted, the processor 52 waits until it receives a response from the radio tag T.

Here, the radio tag T receives the selection command from the antenna 51. The radio tag T makes a response since the TID included in the selection command matches its own TID.

The processor 52 receives the response from the radio tag T through the antenna 51. Upon receiving the response, the processor 52 transmits a command to write data to the radio tag T through the antenna 51.

Here, the radio tag T receives the command and then writes data into its memory. Once the data is written into its memory, the radio tag T transmits a response indicating that the writing was successful.

The processor 52 receives the response including the TID from the radio tag T through the antenna 51. Upon receiving the response, the processor 52 transmits the TID included in the response indicating that writing was completed to the controller 100.

Note that if the writing has failed, the processor 52 transmits a response indicating that the writing has failed to the controller 100.

In some examples, the processor 52 may not need to transmit the selection command.

Next, certain functions implemented by the image forming apparatus 10 will be described. These functions implemented by the image forming apparatus 10 are implemented by the processor 91 executing the programs stored in the internal memory, the auxiliary storage device 93, or the like.

First, the processor 91 has a function of reading the TID from the radio tag T through the radio tag communication device 50.

The processor 91 receives an issue command through the control panel 13 or the like. The issue command is a command to output one or more sheets S. The issue command may indicate data to be written to the radio tag T, the number of sheets S to be issued, print contents (print data), or the like.

Upon receiving the issue command, the processor 91 controls the conveyance rollers 330 and the like to pick up a sheet S from the paper feed cassette 16a or 16b. After the sheet S is picked up, the processor 91 conveys the sheet S to a position where the radio tag T of the picked up sheet S can communicate with the radio tag communication device 50. In this example, the processor 91 conveys the sheet S to the registration rollers 31. After the sheet S is conveyed to the registration rollers 31, the processor 91 stops conveying the sheet S.

After the conveyance of the sheet S is stopped, the processor 91 causes the radio tag communication device 50 to acquire the TID from the radio tag T of the stopped sheet S. That is, the processor 91 transmits a command to read the TID to the radio tag communication device 50.

Here, as described above, the radio tag communication device 50 reads the TID from the radio tag T and transmits the TID as read to the controller 100 in accordance with the command.

The processor 91 thus acquires the TID from the radio tag communication device 50.

The processor 91 has a function of re-reading the TID from a different radio tag T if the read TID is already included in the TID list.

Upon reading the TID, the processor 91 acquires a TID list from the auxiliary storage device 93. After reading the TID list from the auxiliary storage device 93, the processor 91 determines whether the just read TID is included in the TID list.

If it is determined that the just read TID is included in the TID list, the processor 91 causes the radio tag communication device 50 to attempt to acquire the TID from a different radio tag T.

When the just read TID is not included in the TID list, the processor 91 adds the newly acquired TID to the TID list.

Note that the processor 91 may display an error on the control panel 13 or the like, if it is determined that the just read TID is already included in the TID list after than a predetermined threshold number of reading attempts.

The processor 91 also has a function of writing data into the radio tag T through the radio tag communication device 50.

After the TID is added to the TID list, the processor 91 causes the radio tag communication device 50 to write data to the radio tag T corresponding to the TID. That is, the processor 91 transmits a command to write data corresponding to the TID of the radio tag T to the radio tag communication device 50. For example, the command indicates the TID, predetermined data to be written, and the like.

Here, as described above, the radio tag communication device 50 transmits a selection command to select the radio tag T indicated by the TID in accordance with the command, and receives a response from the radio tag T. Upon receiving the response, the radio tag communication device 50 transmits a command to write the data to the radio tag T.

After the command is transmitted to the radio tag T, the radio tag communication device 50 transmits a response indicating success or failure of writing to the controller 100 based on the response from the radio tag T.

The processor 91 receives a response indicating success or failure of writing from the radio tag communication device 50.

The processor 91 also has a function of causing the printer unit 18 to print an image on the sheet S if the tag data writing is successful.

Upon receiving a response indicating that the writing was successful, the processor 91 resumes conveying the sheet S using the conveyance rollers 330 or the like.

Further, the processor 91 forms a toner image on the intermediate transfer belt 21 using the image forming stations 22Y, 22M, 22C, and 22K.

The processor 91 continues to convey the sheet S to the secondary transfer roller 32. Once the sheet S is conveyed to the secondary transfer roller 32, the processor 91 transfers the toner image from the intermediate transfer belt 21 to the sheet S using the secondary transfer roller 32.

After the toner image is transferred onto the sheet S, the processor 91 conveys the sheet S to the fixing device 34 and fixes the toner image on the sheet S using the fixing device 34.

After the toner image is fixed on the sheet S, the processor 91 controls the distribution mechanism 35 to discharge the sheet S to the lower tray 20L.

Upon receiving a response indicating that the writing has failed, the processor 91 starts conveying the sheet S using the conveyance roller 330 or the like. The processor 91 controls the distribution mechanism 35 to discharge the sheet S to the upper tray 20U.

If the issue command is to issue a plurality of sheets S, the processor 91 repeats the operation of acquiring the TID, the operation of writing data, and the operation of printing an image on the sheets S multiple times.

Next, an example of the operation of the controller 100 will be described.

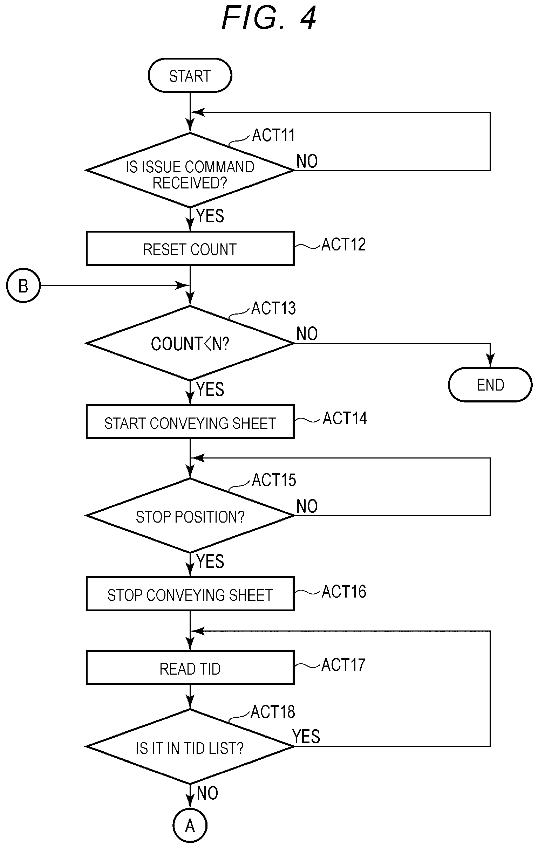

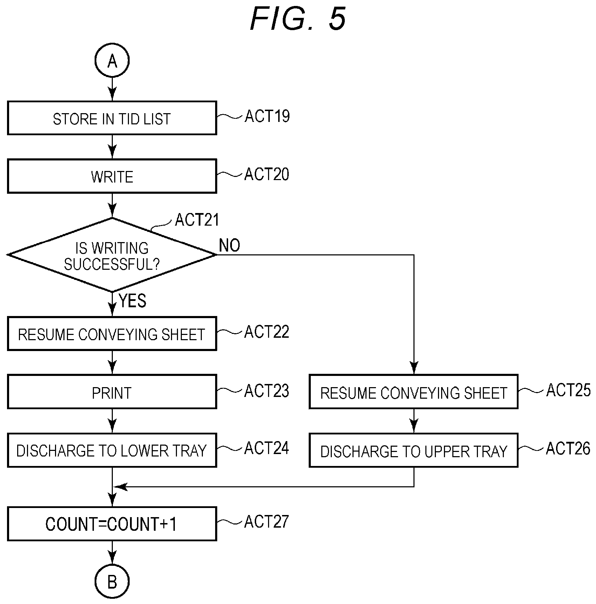

FIGS. 4 and 5 are flowcharts for describing an example of the operation of the controller 100.

First, the processor 91 of the controller 100 determines whether an issue command has been received (ACT 11). If the issue command has not been received (ACT 11, NO), the processor 91 returns to ACT 11.

If the issue command has been received (ACT 11, YES), the processor 91 resets a counter value (COUNT) (substitutes 0 for existing value of COUNT) (ACT 12). After resetting COUNT, the processor 91 next determines whether COUNT < N (ACT 13). Here, N is the number of sheets S to be issued according to the received issue command.

If it is determined that COUNT < N (ACT 13, YES), the processor 91 starts conveying the sheet S using the conveyance rollers 330 or the like (ACT 14). After the conveyance of the sheet S is started, the processor 91 next determines whether the sheet S has reached the stop position (registration rollers 31) (ACT 15).

If the sheet S has not reached the stop position (registration rollers 31) (ACT 15, NO), the processor 91 returns to ACT 15.

If the sheet S has reached the stop position (registration rollers 31) (ACT 15, YES), the processor 91 stops conveying the sheet S (ACT 16). After the conveyance of the sheet S is stopped, the processor 91 attempts to read the TID from the radio tag T of the stopped sheet S using the radio tag communication device 50 (ACT 17).

Upon reading the TID, the processor 91 determines whether the just read TID is included in the TID list (ACT 18). If it is determined that the read TID is included in the TID list (ACT 18, YES), the processor 91 returns to ACT 17.

If it is determined that the just read TID is not included in the TID list (ACT 18, NO), the processor 91 adds the TID to the TID list (ACT 19). After the read TID is added to the TID list, the processor 91 writes data corresponding to the read TID to the radio tag T through the radio tag communication device 50 (ACT 20).

According to the invention, after data is written to the radio tag T indicated by the TID, the processor 91 determines whether the data writing was successful (ACT 21). That is, the processor 91 determines whether a response indicating that data writing was successful has been received from the radio tag communication device 50.

If the writing was successful (ACT 21, YES), the processor 91 resumes conveying the sheet S using the conveyance rollers 330 or the like (ACT 22). After the conveyance of the sheet S is resumed, the processor 91 prints an image on the sheet S using the printer unit 18 (ACT 23).

After the image is printed on the sheet S, the processor 91 discharges the sheet S to the lower tray 20L (ACT 24).

If the writing has failed (ACT 21, NO), the processor 91 resumes conveying the sheet S using the conveyance rollers 330 or the like (ACT 25). After the conveyance of the sheet S is resumed, the processor 91 discharges the sheet S to the upper tray 20U (ACT 26).

If the sheet S is discharged to the lower tray 20L (ACT 24) or the upper tray 20U (ACT 26), the processor 91 increments COUNT (COUNT = COUNT + 1) (ACT 27).

After incrementing COUNT, the processor 91 returns to ACT 13.

If it is determined that COUNT < N is not true (ACT 13, NO), the processor 91 ends the operation.

Next, an example of the operation of the radio tag communication device 50 (an example of the operation of the radio tag communication device 50 in ACT 17 and ACT 20) will be described.

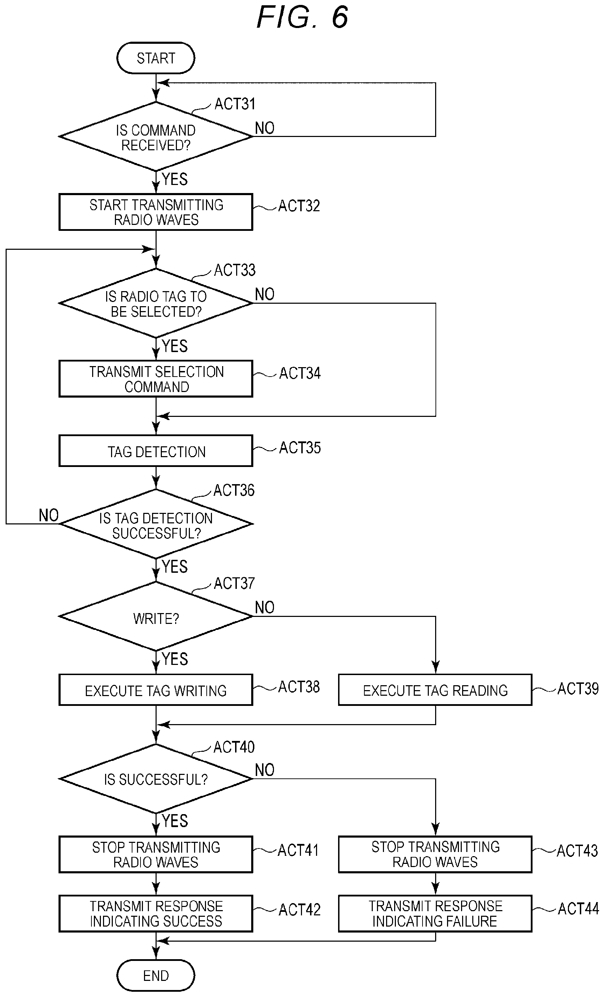

FIG. 6 is a flowchart for describing an example of the operation of the radio tag communication device 50 (an example of the operation of the radio tag communication device 50 corresponding to operations for ACT 17 and ACT 20).

First, the processor 52 of the radio tag communication device 50 determines whether a command has been received from the controller 100 (ACT 31). If no command has been received from the controller 100 (ACT 31, NO), the processor 52 returns to ACT 31.

When a command has been received from the controller 100 (ACT 31, YES), the processor 52 starts transmitting radio waves through the antenna 51 (ACT 32). Once the transmission of radio waves is started, the processor 52 determines whether a particular radio tag T is to be selected (ACT 33). For example, if the command from the controller 100 is a command to write data to a particular radio tag T (TID), the processor 52 determines to select the particular radio tag T.

If the radio tag T is to be selected (ACT 33, YES), the processor 52 transmits a selection command through the antenna 51 (ACT 34).

If the radio tag T is not selected (ACT 33, NO) or if a selection command has already been transmitted (ACT 34), the processor 52 transmits a tag detection command through the antenna 51, and waits until a response is received from a radio tag T (ACT 35).

If no response is received from a radio tag T (ACT 36, NO), the processor 52 returns to ACT 33.

If a response has been received from the radio tag T (ACT 36, YES), the processor 52 next determines whether to write data to the radio tag T in accordance with the command from the controller 100 (ACT 37).

If it is determined to write data to the radio tag T (ACT 37, YES), the processor 52 transmits a command to write data to the radio tag T through the antenna 51, and writes the data to the radio tag T (ACT 38).

If it is determined to read the TID from the radio tag T (ACT 37, NO) rather than write data to the radio tag T, the processor 52 transmits a command to read the TID to the radio tag T through the antenna 51, and reads the TID from the radio tag T (ACT 39).

After data is written to the radio tag T (ACT 38) or the TID is read from the radio tag T (ACT 39), the processor 52 next determines whether the writing or reading was successful (ACT 40).

If writing or reading was successful (ACT 40, YES), the processor 52 stops transmitting radio waves (ACT 41). After the transmission of radio waves is stopped, the processor 52 transmits a response indicating that the writing was successful or a response including the successfully read TID to the controller 100 (ACT 42).

If it is determined that the writing or reading attempt has failed (ACT 40, NO), the processor 52 stops transmitting radio waves (ACT 43). After the transmission of radio waves is stopped, the processor 52 transmits a response indicating that writing or reading has failed to the controller 100 (ACT 44).

After a response indicating that writing is successful or a response including a successfully read TID is transmitted to the controller 100 (ACT 42), or after a response indicating that writing or reading has failed is transmitted to the controller 100 (ACT 44), the processor 52 ends the operation.

Note that the processor 52 in some examples may not execute ACT 33 and ACT 34. That is, the processor 52 may not transmit the selection command in all embodiments.

Further, if writing data to the radio tag T has failed, the processor 91 may not increment COUNT in some examples.

The image forming apparatus 10 in some examples may be a label printer that prints a barcode label or the like on a roll of paper including the radio tags T.

The image forming apparatus 10 configured as described above reads the TID from the radio tag provided on a sheet S. If the read TID is not already included in the TID list, the image forming apparatus adds the just read TID to the TID list and prints ab image on the sheet S as appropriate. As a result, the image forming apparatus can prevent data from being written to a radio tag to which data has already been written.

Furthermore, if the read TID is already included in the TID list, the image forming apparatus 10 attempts to re-reads a TID from a different radio tag. As a result, the image forming apparatus 10 can continue reading TIDs until a radio tag T to which data is to be written is finally detected.

### (Second Embodiment)

The image forming apparatus 10 of the image forming system 200 according to the second embodiment differs from that of the first embodiment in that the image forming apparatus 10 inquires of a server 60 as to whether the just read TID is included in the TID list. The other components are given the same reference symbols and detailed descriptions of repeated aspects will be omitted.

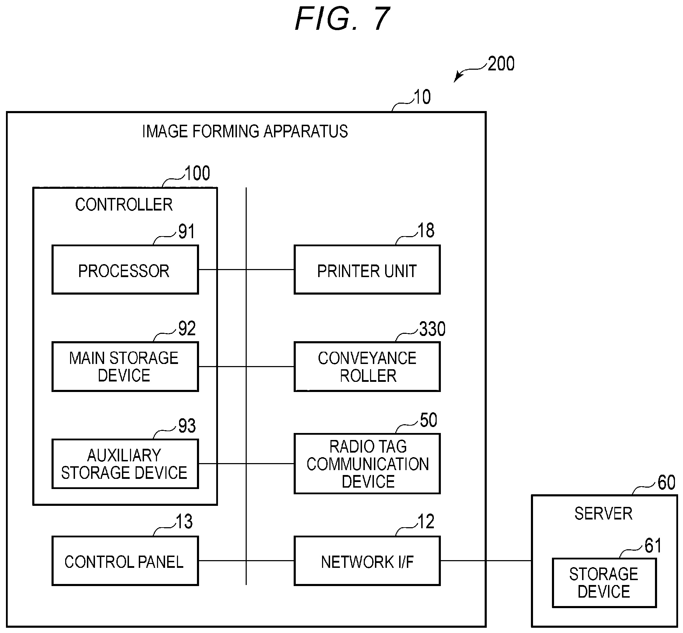

FIG. 7 shows a configuration example of an image forming system 200 according to an embodiment. As shown in FIG. 7, the image forming system 200 includes an image forming apparatus 10 and a server 60. The image forming apparatus 10 and the server 60 are connected via a network or the like.

The configuration of the image forming apparatus 10 is similar to that according to the first embodiment. In the second embodiment, the network interface 12 connects to the server 60 via a network or the like.

The server 60 (an external device) determines whether the TID just read by the radio tag communication device 50 is already included in the TID list.

The server 60 includes a storage device 61. The storage device 61 stores the TID list.

The server 60 receives, from the image forming apparatus 10, a command to determine whether the read TID is included in the TID list. The command includes the TID as read.

Upon receiving the command, the server 60 determines whether the TID included in the command is included in the TID list. After it is determined whether the TID is included in the TID list, the server 60 transmits a response indicating the determination result (e.g., yes or no) to the image forming apparatus 10.

Furthermore, the server 60, receives from the image forming apparatus 10, a command to add a TID to the TID list. The command includes the TID to be added.

Upon receiving the command, the server 60 adds the TID included in the command to the TID list. After the TID is added to the TID list, the server 60 transmits a response indicating that the addition is completed to the image forming apparatus 10.

Next, certain functions implemented by the image forming apparatus 10 will be described. The functions implemented by the image forming apparatus 10 are implemented by the processor 91 executing programs stored in the internal memory, the auxiliary storage device 93, or the like.

The image forming apparatus 10 implements the following functions in addition to the functions of the image forming apparatus 10 according to the first embodiment.

First, the processor 91 has a function of inquiring of the server 60 whether a TID read from a radio tag T is included in the TID list.

Upon reading the TID from a radio tag T, the processor 91 transmits a command to the server 60 via the network interface 12 to determine whether the read TID is already included in the TID list..

As described above, the server 60 transmits a response indicating the determination result to the controller 100 in accordance with the command.

The processor 91 receives the response through the network interface 12.

The processor 91 also has a function of causing the server 60 to add the read TID to the TID list.

Upon receiving a response indicating that the read TID is not included in the TID list from the server 60, the processor 91 transmits a command to add the read TID to the TID list to the server 60 via the network interface 12.

As described above, the server 60 adds the TID to the TID list according to the command. After the TID is added to the TID list, the server 60 transmits a response to the controller 100 indicating that the addition is completed.

The processor 91 receives the response through the network interface 12.

Next, an example of the operation of the controller 100 will be described.

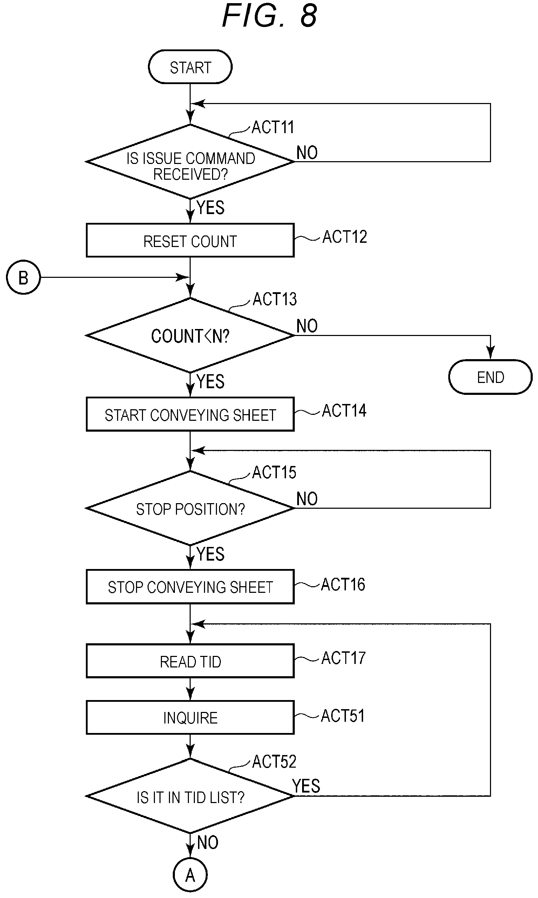

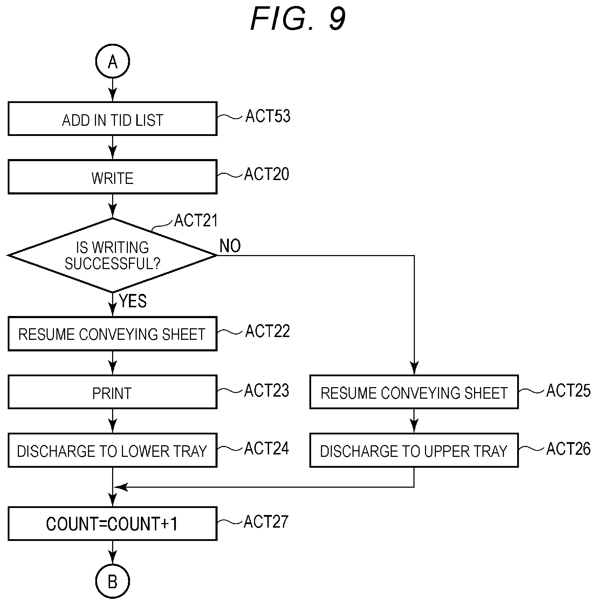

FIGS. 8 and 9 are flowcharts for describing an example of the operation of the controller 100.

ACT 11 to ACT 17 are as described above.

After reading the TID from the radio tag T of the sheet S (ACT 17), the processor 91 transmits a command to the server 60 via the network interface 12 to determine whether the just read TID is already included in the TID list (ACT 51).

After this command is transmitted, the processor 91 determines whether the read TID is in the TID list based on the response from the server 60 (ACT 52). If it is determined that the read TID is in the TID list (ACT 52, YES), the processor 91 returns to ACT 17.

If it is determined that the read TID is not in the TID list (ACT 52, NO), the processor 91 causes the server 60 to add the read TID to the TID list (ACT 53). After adding the read TID to the TID list, the processor 91 proceeds to ACT 20.

ACT 20 to ACT 27 are as described above.

Note that, in some examples, the server 60 may automatically add the TID to the TID list if it is determined that the TID is not already included in the TID list. In this case, the processor 91 need not execute ACT 53.

The image forming system 200 may include a plurality of image forming apparatuses 10. In this case, the TID list may indicate all the TIDs of radio tags T to which any of the plurality of image forming apparatuses 10 have written data.

In the image forming system 200 configured as described above, the TID list is managed by the server 60. As a result, the image forming system 200 does not require the image forming apparatus 10 to have or manage a TID list. Furthermore, if a plurality of image forming apparatuses 10 are provided, the image forming system 200 manages a common TID list. As a result, the image forming system can prevent data from being written to a radio tag to which another image forming apparatus 10 has already written data.

### (Third Embodiment)

The image forming apparatus 10 according to the third embodiment differs from the first embodiment in that the radio tag communication device 50 stores the TID list. The other components are given the same reference symbols and detailed descriptions of repeated aspects will be omitted.

The configuration of the image forming apparatus 10 is similar to that according to the first embodiment, however, in this embodiment, the memory 53 of the radio tag communication device 50 stores the TID list.

Next, certain functions implemented by the radio tag communication device 50 will be described. The functions implemented by the radio tag communication device 50 are implemented by the processor 52 executing programs stored in the internal memory, the memory 53, or the like.

The radio tag communication device 50 of the third embodiment implements the following functions in addition to the functions of the radio tag communication device 50 according to the first embodiment.

First, the processor 52 has a function of re-reading the TID from a different radio tag T if the read TID is included in the TID list.

Here, it is assumed that the processor 52 reads a TID from a radio tag T. Upon reading the TID, the processor 52 acquires a TID list from the memory 53. Upon reading the TID list from the memory 53, the processor 52 determines whether the just read TID is already included in the TID list.

When the just read TID is already included in the TID list, the processor 52 attempts to read the TID from a different radio tag T.

When the just read TID is not included in the TID list, the processor 52 adds the read TID to the TID list.

Note that the processor 52 may transmit a signal indicating an error to the controller 100, if it is determined that the just read TID is already included in the TID list or attempts without reading a new TID exceed a predetermined threshold number of attempts.

Next, an example of the operation of the controller 100 will be described.

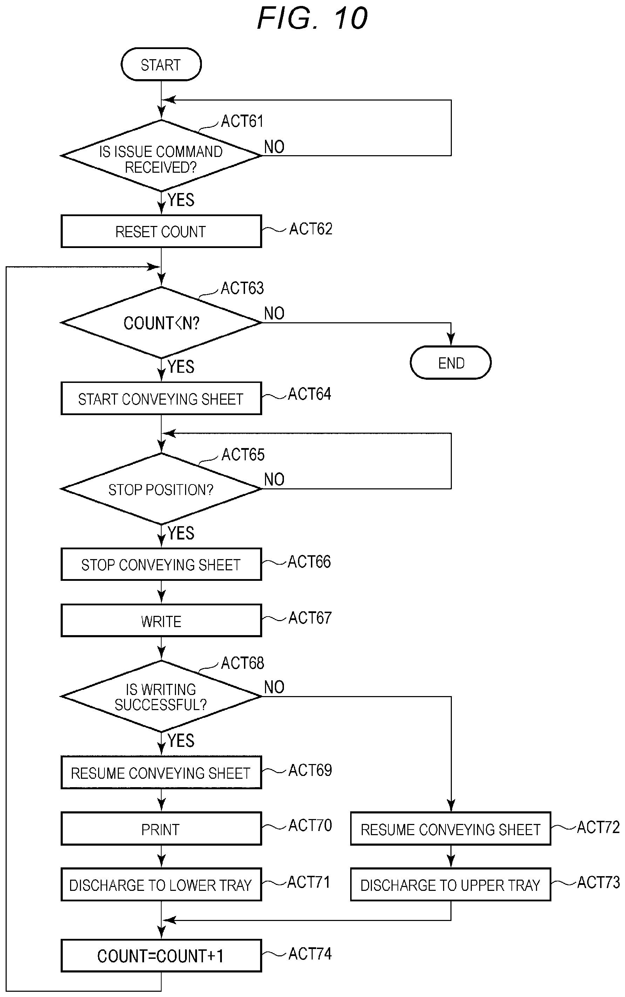

FIG. 10 is a flowchart for describing an example of the operation of the controller 100.

First, the processor 91 of the controller 100 determines whether an issue command has been received (ACT 61). If the issue command has not been received (ACT 61, NO), the processor 91 returns to ACT 61.

If the issue command has been received (ACT 61, YES), the processor 91 resets the counter value COUNT (substitutes 0 for the current value of COUNT) (ACT 62). After resetting COUNT, the processor 91 next determines whether COUNT < N (ACT 63). Here, N is the number of sheets to be issued or the like.

If COUNT < N (ACT 63, YES), the processor 91 starts conveying the sheet S using the conveyance rollers 330 or the like (ACT 64). After the conveyance of the sheet S is started, the processor 91 next determines whether the sheet S has reached the stop position (registration rollers 31) (ACT 65).

If the sheet S has not reached the stop position (registration rollers 31) (ACT 65, NO), the processor 91 returns to ACT 65.

If the sheet S has reached the stop position (registration rollers 31) (ACT 65, YES), the processor 91 stops conveying the sheet S (ACT 66). After the conveyance of the sheet S is stopped, the processor 91 writes data to the radio tag T of the sheet S through the radio tag communication device 50 (ACT 67). That is, the processor 91 transmits a command to the radio tag communication device 50 to write data to the radio tag T.

After data is written to the radio tag T, the processor 91 determines whether the writing was successful (ACT 68).

If the writing was successful (ACT 68, YES), the processor 91 resumes conveying the sheet S using the conveyance rollers 330 or the like (ACT 69). After the conveyance of the sheet S is resumed, the processor 91 prints an image on the sheet S using the printer unit 18 (ACT 70).

After printing the image on the sheet S, the processor 91 discharges the sheet S to the lower tray 20L (ACT 71).

If the writing has failed (ACT 68, NO), the processor 91 resumes conveying the sheet S using the conveyance rollers 330 or the like (ACT 72). After the conveyance of the sheet S is resumed, the processor 91 discharges the sheet S to the upper tray 20U (ACT 73).

After the sheet S is discharged to the lower tray 20L (ACT 71) or the upper tray 20U (ACT 73), the processor 91 increments COUNT (COUNT = COUNT + 1) (ACT 74).

After incrementing COUNT, the processor 91 returns to ACT 63.

If COUNT < N is not true (ACT 63, NO), the processor 91 ends the operation.

Next, an example of the operation of the radio tag communication device 50 (an example of the operation of the radio tag communication device 50 corresponding to operations in ACT 67) will be described.

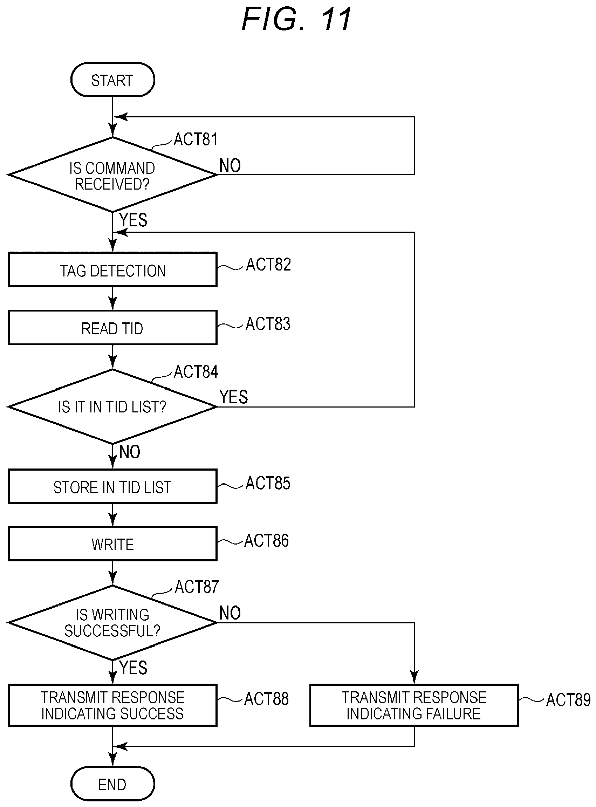

FIG. 11 is a flowchart for describing an example of the operation of the radio tag communication device 50 (an example of the operation of the radio tag communication device 50 related to ACT 67).

First, the processor 52 of the radio tag communication device 50 determines whether a command has been received from the controller 100 (ACT 81). If no command has been received from the controller 100 (ACT 81, NO), the processor 52 returns to ACT 81.

If a command has been received from the controller 100 (ACT 81, YES), the processor 52 transmits a tag detection command through the antenna 51, and waits until a response is received from a radio tag T (ACT 82).

Upon receiving a response from the radio tag T, the processor 52 transmits a command to the radio tag T through the antenna 51 to read the TID, and thus reads the TID from the radio tag T (ACT 83). After reading the TID, the processor 52 next determines whether the read TID is in the TID list (ACT 84).

If the just read TID is already included in the TID list (ACT 84, YES), the processor 52 returns to ACT 82.

If the just read TID is not included in the TID list (ACT 84, NO), the processor 52 adds the TID to the TID list (ACT 85). After the read TID is added to the TID list, the processor 52 transmits a command to write data to the radio tag T through the antenna 51, and writes the data to the radio tag T (ACT 86).

After data is written to the radio tag T, the processor 52 determines whether the writing was successful (ACT 87).

If the writing was successful (ACT 87, YES), the processor 52 transmits a response indicating that the writing was successful to the controller 100 (ACT 88).

If the writing has failed (ACT 87, NO), the processor 52 transmits a response indicating that the writing has failed to the controller 100 (ACT 89).

After a response indicating that writing was successful is transmitted to the controller 100 (ACT 88), or a response indicating that writing has failed is transmitted to the controller 100 (ACT 89), the processor 52 ends the operation.

The image forming apparatus 10 configured as described above stores the TID list in the memory included in the radio tag communication device 50. As a result, the image forming apparatus 10 can prevent data from being written to a radio tag to which data has already been written without having to manage the TID list on the controller side.

A program according to an embodiment of the present disclosure may be transferred already stored in an electronic device or by other means. In the latter case, a program may be transferred via a network or stored in a storage medium. The storage medium is a non-transitory, tangible computer readable medium. The storage medium may be of any type as long as it is capable of storing a program and is readable by a computer, such as a CD-ROM or a memory card.

## Claims

1. An image forming apparatus (10), comprising:
a printer (18) that prints images on a medium;
a communication device (50) that transmits data to, and receives data from, a radio tag on the medium; and
a processor (52) configured to control the communication device to read tag identification information from the radio tag, wherein
if the tag identification information read from the radio tag is included on a list indicating identification information of radio tags to which data is written, the communication device is controlled to attempt to read tag identification information from another radio tag, and
if the tag identification information read from the radio tag is not included on the list, the communication device is controlled to write data to the radio tag, wherein
after data is written to the radio tag, the processor determines whether the data writing is successful upon receiving a response indicating that data writing is successful from the communication device (50), and the printer is controlled to print an image on the medium if the writing is successful.

2. The image forming apparatus according to claim 1, wherein the processor is further configured to:
control the communication device to transmit a selection command to select the radio tag matching the tag identification information when the tag identification information is not included on the list, before the communication device is controlled to write data to the radio tag.

3. The image forming apparatus according to claim 1 or 2, further comprising:
a memory storage unit that stores the list.

4. The image forming apparatus according to any one of claims 1 to 3, further comprising:
a communication interface that transmits and receives data to and from an external device, wherein
the processor is configured to:
transmit a command including the read tag identification information to the external device through the communication interface, and
receive, through the communication interface, a response indicating whether the read tag identification information is included on the list.

5. The image forming apparatus according to any one of claims 1 to 4, further comprising:
a first tray (20U) and a second tray (20L) to which the medium can be discharged; and
a conveyance device (330) that conveys the medium, wherein
the processor is further configured to:
discharge the medium to the first tray using the conveyance device when data writing to the radio tag on the medium has failed, and
discharge the medium to the second tray using the conveyance device when data writing to the radio tag of the medium was successful.

6. The image forming apparatus according to any one of claims 1 to 5, wherein the communication device stores the list.

7. The image forming apparatus according to any one of claims 1 to 6, wherein the processor is further configured to:
convey the medium to a registration roller before controlling the communication device to read the tag identification information from the radio tag.

8. The image forming apparatus according to any one of claims 1 to 7, wherein the processor compares the tag identification information to the list to determine whether the tag identification information is on the list.

9. The image forming apparatus according to claim 8, wherein the processor is further configured to add the tag identification information to the list after the data is successfully written to the radio tag.

10. The image forming apparatus according to any one of claims 1 to 9, the communication device comprising:
an antenna (51) configured to transmit data to, and receive data from, a radio tag provided on a medium.

11. A label printing system, comprising:
a plurality of image forming apparatus according to any one of claims 1 to 10, each of plurality of image forming apparatus is a label printer for printing labels, each label printer including a radio tag reader/writer device for writing information to a radio tag attached to the labels printed by the plurality of label printers; and
a server connected to the plurality of label printers and storing a list of radio tags that have been written with data by the plurality of label printers, wherein
a processor in each label printer is configured to:
control the radio tag reader/writer device to read tag identification information from the radio tag,
transmit an inquiry to the server to check whether the tag identification information from the radio tag is on the list,
if the tag identification information read from the radio tag is included on the list, radio tag reader/writer device is controlled to attempt to read tag identification information from another radio tag, and
if the tag identification information read from the radio tag is not included on the list, the radio tag reader/writer device is controlled to write data to the radio tag, and the label printer is controlled to print a label to which the radio tag is attached.

12. The label printing system according to claim 11, wherein the processor is further configured to request that the server add the tag identification information to the list after the data is successfully written to the radio tag.

## Patentansprüche

1. Bilderzeugungsvorrichtung (10), umfassend:
einen Drucker (18), der Bilder auf ein Medium druckt;
eine Kommunikationsvorrichtung (50), die Daten an ein Funketikett auf dem Medium überträgt und davon empfängt; und
einen Prozessor (52), der konfiguriert ist, um die Kommunikationsvorrichtung zu steuern, um Etiketten-Identifizierungsinformationen von dem Funketikett zu lesen, wobei,
wenn die von dem Funketikett gelesenen Etiketten-Identifizierungsinformationen in einer Liste beinhaltet sind, die Identifizierungsinformationen von Funketiketten angibt, auf die Daten geschrieben sind, die Kommunikationsvorrichtung gesteuert wird, um zu versuchen, Etiketten-Identifizierungsinformationen von einem anderen Funketikett zu lesen, und
wenn die von dem Funketikett gelesenen Etiketten-Identifizierungsinformationen in der Liste nicht beinhaltet sind, die Kommunikationsvorrichtung gesteuert wird, um Daten auf das Funketikett zu schreiben, wobei
nachdem Daten auf das Funketikett geschrieben wurden, der Prozessor bestimmt, ob das Schreiben der Daten erfolgreich war, nachdem von der Kommunikationsvorrichtung (50) eine Antwort empfangen wurde, die angibt, dass das Schreiben der Daten erfolgreich war, und der Drucker gesteuert wird, um ein Bild auf das Medium zu drucken, wenn das Schreiben erfolgreich war.

2. Bilderzeugungsvorrichtung nach Anspruch 1, wobei der Prozessor ferner zu Folgendem konfiguriert ist:
Steuern der Kommunikationsvorrichtung, um einen Auswahlbefehl zu übertragen, um das Funketikett auszuwählen, das mit den Etiketten-Identifizierungsinformationen übereinstimmt, wenn die Etiketten-Identifizierungsinformationen in der Liste nicht beinhaltet sind, bevor die Kommunikationsvorrichtung gesteuert wird, um Daten auf das Funketikett zu schreiben.

3. Bilderzeugungsvorrichtung nach Anspruch 1 oder 2, ferner umfassend:
eine Speichereinheit, die die Liste speichert.

4. Bilderzeugungsvorrichtung nach einem der Ansprüche 1 bis 3, ferner umfassend:
eine Kommunikationsschnittstelle, die Daten zu einer externen Vorrichtung überträgt und davon empfängt, wobei
der Prozessor zu Folgendem konfiguriert ist:
Übertragen eines Befehls, der die gelesenen Etiketten-Identifizierungsinformationen beinhaltet, über die Kommunikationsschnittstelle an die externe Vorrichtung und
Empfangen einer Antwort über die Kommunikationsschnittstelle, die angibt, ob die gelesenen Etiketten-Identifizierungsinformationen in der Liste beinhaltet sind.

5. Bilderzeugungsvorrichtung nach einem der Ansprüche 1 bis 4, ferner umfassend:
ein erstes Fach (20U) und ein zweites Fach (20L), in das das Medium ausgegeben werden kann; und
eine Fördervorrichtung (330), die das Medium fördert, wobei
der Prozessor ferner zu Folgendem konfiguriert ist:
Ausgeben des Mediums unter Verwendung der Fördervorrichtung in das erste Fach, wenn das Schreiben von Daten auf das Funketikett auf dem Medium fehlgeschlagen ist, und
Ausgeben des Mediums unter Verwendung der Fördervorrichtung in das zweite Fach, wenn das Schreiben von Daten auf das Funketikett des Mediums erfolgreich war.

6. Bilderzeugungsvorrichtung nach einem der Ansprüche 1 bis 5, wobei die Kommunikationsvorrichtung die Liste speichert.

7. Bilderzeugungsvorrichtung nach einem der Ansprüche 1 bis 6, wobei der Prozessor ferner zu Folgendem konfiguriert ist:
Fördern des Mediums zu einer Registrierwalze, bevor die Kommunikationsvorrichtung gesteuert wird, um die Etiketten-Identifizierungsinformationen von dem Funketikett zu lesen.

8. Bilderzeugungsvorrichtung nach einem der Ansprüche 1 bis 7, wobei der Prozessor die Etiketten-Identifizierungsinformationen mit der Liste vergleicht, um zu bestimmen, ob die Etiketten-Identifizierungsinformationen in der Liste beinhaltet sind.

9. Bilderzeugungsvorrichtung nach Anspruch 8, wobei der Prozessor ferner konfiguriert ist, um die Etiketten-Identifizierungsinformationen nach erfolgreichem Schreiben der Daten auf das Funketikett zu der Liste hinzuzufügen.

10. Bilderzeugungsvorrichtung nach einem der Ansprüche 1 bis 9, die Kommunikationsvorrichtung umfassend:
eine Antenne (51), die konfiguriert ist, um Daten an ein auf einem Medium bereitgestelltes Funketikett zu übertragen und davon zu empfangen.

11. Etikettendrucksystem, umfassend:
eine Vielzahl von Bilderzeugungsvorrichtungen nach einem der Ansprüche 1 bis 10, wobei jede der Vielzahl von Bilderzeugungsvorrichtungen ein Etikettendrucker zum Drucken von Etiketten ist, wobei jeder Etikettendrucker eine Funketikett-Lese-/Schreibvorrichtung zum Schreiben von Informationen auf ein an den von der Vielzahl von Etikettendruckern gedruckten Etiketten angebrachtes Funketikett umfasst; und
einen Server, der mit der Vielzahl von Etikettendruckern verbunden ist und eine Liste von Funketiketten speichert, auf die von der Vielzahl von Etikettendruckern Daten geschrieben wurden,
wobei ein Prozessor in jedem Etikettendrucker zu Folgendem konfiguriert ist:
Steuern der Funketikett-Lese-/Schreibvorrichtung, um Etiketten-Identifizierungsinformationen von dem Funketikett zu lesen,
Übertragen einer Anfrage an den Server, um zu prüfen, ob die Etiketten-Identifizierungsinformationen von dem Funketikett in der Liste sind,
wenn die von dem Funketikett gelesenen Etiketten-Identifizierungsinformationen in der Liste beinhaltet sind, wird die Funketikett-Lese-/Schreibvorrichtung gesteuert, um zu versuchen, Etiketten-Identifizierungsinformationen von einem anderen Funketikett zu lesen, und
wenn die von dem Funketikett gelesenen Etiketten-Identifizierungsinformationen nicht in der Liste beinhaltet sind, wird die Funketikett-Lese-/Schreibvorrichtung gesteuert, um Daten auf das Funketikett zu schreiben, und der Etikettendrucker wird gesteuert, um ein Etikett zu drucken, an dem das Funketikett angebracht ist.

12. Etikettendrucksystem nach Anspruch 11, wobei der Prozessor ferner konfiguriert ist, um anzufordern, dass der Server die Etiketten-Identifizierungsinformationen nach erfolgreichem Schreiben der Daten auf das Funketikett zu der Liste hinzufügt.

## Revendications

1. Appareil de formation d'images (10), comprenant :
une imprimante (18) qui imprime des images sur un support ;
un dispositif de communication (50) qui transmet des données à, et reçoit des données depuis, une radio-étiquette sur le support ; et
un processeur (52) configuré pour commander le dispositif de communication afin de lire des informations d'identification d'étiquette depuis la radio-étiquette, dans lequel
si les informations d'identification d'étiquette lues depuis la radio-étiquette sont incluses dans une liste indiquant les informations d'identification des radio-étiquettes sur lesquelles des données sont écrites, le dispositif de communication est commandé pour tenter de lire des informations d'identification d'étiquette depuis une autre radio-étiquette, et
si les informations d'identification d'étiquette lues depuis la radio-étiquette ne sont pas incluses dans la liste, le dispositif de communication est commandé pour écrire des données sur la radio-étiquette, dans lequel
après que des données ont été écrites sur la radio-étiquette, le processeur détermine si l'écriture des données est réussie lors de la réception d'une réponse indiquant que l'écriture des données est réussie depuis le dispositif de communication (50), et l'imprimante est commandée pour imprimer une image sur le support si l'écriture est réussie.

2. Appareil de formation d'images selon la revendication 1, dans lequel le processeur est en outre configuré pour :
commander le dispositif de communication afin de transmettre une commande de sélection pour sélectionner la radio-étiquette correspondant aux informations d'identification d'étiquette lorsque les informations d'identification d'étiquette ne sont pas incluses dans la liste, avant que le dispositif de communication ne soit commandé pour écrire des données sur la radio-étiquette.

3. Appareil de formation d'images selon la revendication 1 ou la revendication 2, comprenant en outre :
une unité de stockage en mémoire qui stocke la liste.

4. Appareil de formation d'images selon l'une quelconque des revendications 1 à 3, comprenant en outre :
une interface de communication qui transmet et reçoit des données vers et depuis un dispositif externe, dans lequel
le processeur est configuré pour :
transmettre une commande comprenant les informations d'identification d'étiquette lues au dispositif externe par le biais de l'interface de communication, et
recevoir, par le biais de l'interface de communication, une réponse indiquant si les informations d'identification d'étiquette lues sont incluses dans la liste.

5. Appareil de formation d'images selon l'une quelconque des revendications 1 à 4, comprenant en outre :
un premier plateau (20U) et un deuxième plateau (20L) sur lesquels le support peut être déchargé ; et
un dispositif de transport (330) qui transporte le support, dans lequel le processeur est en outre configuré pour :
décharger le support vers le premier plateau à l'aide du dispositif de transport lorsque l'écriture de données sur la radio-étiquette du support a échoué, et
décharger le support vers le deuxième plateau à l'aide du dispositif de transport lorsque l'écriture de données sur la radio-étiquette du support a réussi.

6. Appareil de formation d'images selon l'une quelconque des revendications 1 à 5, dans lequel le dispositif de communication stocke la liste.

7. Appareil de formation d'images selon l'une quelconque des revendications 1 à 6, dans lequel le processeur est en outre configuré pour :
transporter le support vers un rouleau d'enregistrement avant de commander le dispositif de communication pour lire les informations d'identification d'étiquette depuis la radio-étiquette.

8. Appareil de formation d'images selon l'une quelconque des revendications 1 à 7, dans lequel le processeur compare les informations d'identification d'étiquette à la liste pour déterminer si les informations d'identification d'étiquette figurent sur la liste.

9. Appareil de formation d'images selon la revendication 8, dans lequel le processeur est en outre configuré pour ajouter les informations d'identification d'étiquette à la liste après que les données ont été écrites avec succès sur la radio-étiquette.

10. Appareil de formation d'images selon l'une quelconque des revendications 1 à 9, le dispositif de communication comprenant :
une antenne (51) configurée pour transmettre des données à, et recevoir des données depuis, une radio-étiquette disposée sur un support.

11. Système d'impression d'étiquettes, comprenant :
une pluralité d'appareils de formation d'images selon l'une quelconque des revendications 1 à 10, chaque appareil de la pluralité d'appareils de formation d'images étant une imprimante d'étiquettes pour imprimer des étiquettes, chaque imprimante d'étiquettes comprenant un dispositif lecteur/enregistreur de radio-étiquette pour écrire des informations sur une radio-étiquette fixée aux étiquettes imprimées par la pluralité d'imprimantes d'étiquettes ; et
un serveur connecté à la pluralité d'imprimantes d'étiquettes et stockant une liste de radio-étiquettes sur lesquelles des données ont été écrites par la pluralité d'imprimantes d'étiquettes, dans lequel
un processeur dans chaque imprimante d'étiquettes est configuré pour :
commander le dispositif lecteur/enregistreur de radio-étiquette pour lire des informations d'identification d'étiquette depuis la radio-étiquette,
transmettre une requête au serveur pour vérifier si les informations d'identification d'étiquette provenant de la radio-étiquette figurent sur la liste,
si les informations d'identification d'étiquette lues depuis la radio-étiquette sont incluses dans la liste, le dispositif lecteur/enregistreur de radio-étiquette est commandé pour tenter de lire des informations d'identification d'étiquette depuis une autre radio-étiquette, et
si les informations d'identification d'étiquette lues depuis la radio-étiquette ne sont pas incluses dans la liste, le dispositif lecteur/enregistreur de radio-étiquette est commandé pour écrire des données sur la radio-étiquette, et l'imprimante d'étiquettes est commandée pour imprimer une étiquette sur laquelle la radio-étiquette est fixée.

12. Système d'impression d'étiquettes selon la revendication 11, dans lequel le processeur est en outre configuré pour demander au serveur d'ajouter les informations d'identification d'étiquette à la liste après que les données ont été écrites avec succès sur la radio-étiquette.
